# EUROPÄISCHE PATENTANMELDUNG

(11) **EP 0 698 798 A2**
(43) Veröffentlichungstag der Anmeldung: **28.02.1996**
(21) Anmeldenummer: 95102116.1
(22) Anmeldetag: 16.02.1995
(51) Int. Cl.: G02B 1/10, B29D 11/00

(54) **Beschichtete optische Kunststofflinse**

(30) Priorität: 26.08.1994 DE 4030363
(71) Anmelder: LEYBOLD AKTIENGESELLSCHAFT, D-63450 Hanau (DE)
(72) Erfinder: Zültzke, Walter, D-63477 Maintal (DE); Arhilger, Detlef, D-63801 Klein-Ostheim (DE)

(57) **Zusammenfassung**

Bei einer optischen Linse aus einem klarsichtigen Kunststoff (1) und einer ersten Schicht (2) aus SiO unmittelbar auf dem Substrat, ist die zweite Schicht (3) um ein shiftfreies spektrales Verhalten zu gewährleisten aus Borosilicatglas mit einem Brechwert von 1.47 (Lambda 550 nm) gebildet. Die Dicke der Borosilicatglasschicht beträgt dabei bis zu 3 µ, vorzugsweise 2550 nm, wobei die Schichten 3 bis 7 zum Zwecke einer Antireflexwirkung aus TiO₂, SiO₂, Al₂O₃ gebildet sind.

## Beschreibung

Die Erfindung betrifft eine optische Linse aus einem klarsichtigen Kunststoff und einer ersten Schicht als Haftschicht aus SiO unmittelbar auf dem Substrat.

Bei Linsen besteht oft das Problem, eine Schutzschicht aufzubringen, die einerseits lichtdurchlässig ist und andererseits entspiegelt. Dies trifft sowohl für Kameralinsen als auch für Linsen von Brillengläsern zu. Beispielsweise können Brillengläser bei unsachgemäßer Behandlung extremen Belastungen ausgesetzt sein, die nicht nur bei Kunststoffgläsern, sondern auch bei Silikatgläsern Kratzer hervorrufen. Verantwortlich für eine Oberflächenverletzung ist in der Regel ein scharfkantiger Gegenstand, der mit Druck über die Oberfläche gezogen wird. Das kann z. B. Sand mit seinen scharfen Kanten sein, der sich im Putztuch oder Etui befindet, oder auch ein rauhes Gewebe.

Kunststoffgläser, die immer häufiger anstelle von Silikatgläsern eingesetzt werden, weil sie die Eigenschaften des geringeren Gewichts und der höheren Bruchfestigkeit mit der Möglichkeit der individuellen Einfärbung verbinden, haben jedoch den gravierenden Nachteil, daß ihre gegenüber Silikatgläsern erheblich weichere Oberfläche sehr anfällig gegen mechanische Verletzungen ist.

Weit verbreitet als Linsen-Kunststoffe sind die Duroplaste, die aus chemisch engmaschig untereinander gebundenen Makromolekülen bestehen. Bei Raumtemperaturen sind sie meist sehr spröde. Sie sind außerdem temperaturstandfest, nicht schweißbar, unlöslich und nur schwach quellbar. Ein in der Brillen-Optik bevorzugtes Duroplast ist CR 39, bei dem es sich um ein Diallyldiethylenglykolkarbonat handelt. Erst in jüngster Zeit traten neben diesen in der Brillenoptik fast ausschließlich verwendeten Kunststoff auch noch andere Kunststoffe wie Polymethylmethacrylat (PMMA), Polystyrol (PS) und Polycarbonat (PC).

Da Brillengläser aus Kunststoffen insbesondere aus CR 39 nicht kratzfest sind, werden solche Gläser üblicherweise mit einem Hartlack überzogen. Ein derartiger Lackiervorgang ist jedoch aufwendig und erfordert neben der gleichmäßigen Dicke einem dem Substratmaterial angepaßten Brechwert "n" um Interferenzen zu vermeiden. Um diesen Lackiervorgang einzusparen, wurde bereits damit begonnen, die Substrate in Vakuumbeschichtungsanlagen mit einer verschleißfesten Quarzschicht zu bedampfen. Im gleichen Prozeß wurde anschließend ein Entspiegelungssystem aufgedampft. Um die erforderliche hohe Packungsdichte der Schichten zu erhalten, ohne die Substrate zu beheizen (max. zulässige Substrattemperatur = 85 °C) wurden die Schichten plasmaunterstützt bedampft) (PIAD-Verfahren).

Die hierbei verwendeten Materialien ergaben ein Schichtsystem mit den Wirkungen einer erhöhten Verschleißfestigkeit und einer Antireflexwirkung. Das vorbekannte Schichtsystem (DE 41 28 547) ist jedoch im spektralen Verhalten nicht stabil und die Antireflexwirkung nicht ausreichend.

Der vorliegenden Erfindung liegt daher die Aufgabe zugrunde ein Schichtsystem zu schaffen, das die Eigenschaften des bekannten Systems aufweist, darüber hinaus aber unempfindlich gegenüber Streß ist und damit in seinem spektralen Verhalten besonders stabil und shiftfrei ist.

Diese Aufgabe wird dadurch gelöst, daß die zweite Schicht aus Borosilicatglas mit einem Brechwert von 1.47 gebildet ist und eine Dicke von bis zu 3 µ, vorzugsweise 2550 nm aufweist, wobei die Schichten 3 bis 7 zum Zwecke einer Antireflexwirkung aus TiO₂, SiO₂, Al₂O₃ gebildet sind.

Weitere Merkmale und Einzelheiten ergeben sich aus den Ansprüchen 2 bis 16.

Ausführungsbeispiele der Erfindung sind in der Zeichnung dargestellt und werden im folgenden näher beschrieben. Es zeigen:
- Fig. 1: einen Zwei-Schichten-Aufbau auf einem Konststofflinsen-Substrat;
- Fig. 2: einen acht-Schichten-Aufbau auf einem Kunststofflinsen-Substrat;
- Fig. 3: eine schematische Darstellung eines Plasma-IAD-Prozesses für die Erzeugung von dünnen Schichten.

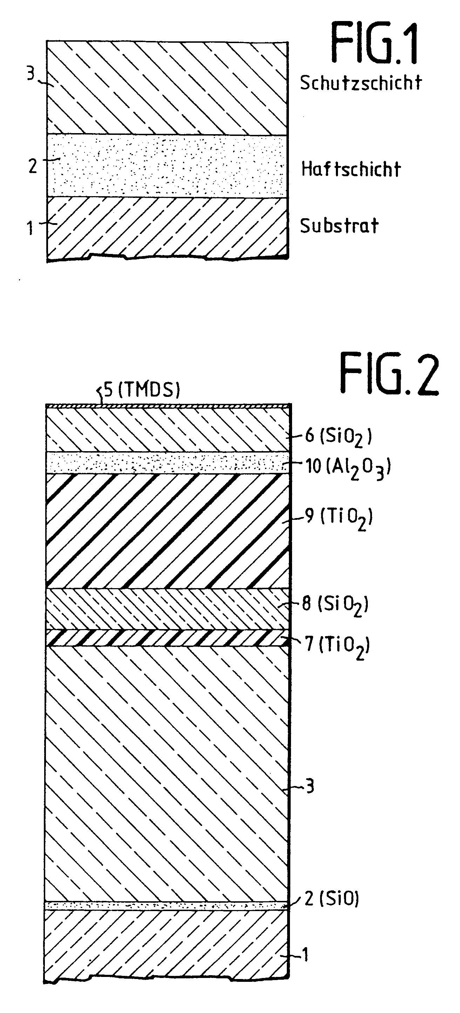

In der Fig. 1 ist ein Linsensubstrat 1 aus einem Kunststoff, z. B. CR 39, dargestellt, das mit einer sehr dünnen SiO-Schicht 2 versehen ist, die eine Dicke von einer Atomlage bis zu 20 nm aufweist. Diese Schicht 2 dient im wesentlichen dazu, eine bessere Haftung einer Schutzschicht 3 mit einer Dicke von wenigstens 500 nm aus Borosilicatglas zu bewirken.

Wie sich gezeigt hat, haftet eine direkt aufgebrachte Borosilicatglas-Schicht nur mäßig auf einem Kunststoff. Bei sogenannten Kochtests werden beschichtete Substrate zyklisch für eine definierte Zeit in eine kochende Salzlösung getaucht, die z. B. 5 % NaCl in Wasser enthält, und danach jeweils in kaltem Wasser abgeschreckt. Eine direkt auf Kunststoff aufgebrachte Schutzschicht löst sich bei derartigen Kochtests sehr schnell, z. B. nach 5 bis 10 Minuten ab. Wird dagegen eine SiO-Schicht 2 zwischen die Schutzschicht 3 und dem Kunststoff-Substrat angeordnet, die bei gleichzeitigem Plasma- und Ionenbeschuß mit oder einer Elektronenstrahlkanone aufgedampft wird, so erhöht sich die Haftung der Schutzschicht 3 erheblich. Selbst nach 40-minütigem Kochtest konnten keinerlei Schichtablösungen an den Schichten 2 und 3 festgestellt werden.

Mit der dicken Borosilicatglas-Schicht 3 werden gegenüber dem Kunststoff-Substrat 1 die Abriebseigenschaften erheblich verbessert. CR 39 hat beispielsweise eine Härte von ca. 180 bis 200 N/mm². Massives Borosilicatglas hat dagegen eine Härte, die um den Faktor 100 größer ist. Die Härte der Schutzschicht 3 kann in einem sehr weiten Bereich über die Plasma- und Beschichtungsparameter eingestellt werden.

Fig. 2 zeigt eine Ausführungsform bei der sich auf der Borosilcatglas-Schicht 3 eine Kombination von vier weiteren Schichten 7 bis 10 befindet, die ausschließlich dem Zwecke der Reflexreduzierung dienen, diese Schichten bestehen von unten nach oben aus TiO₂, SiO₂, TiO₂, Al₂O₃. Eine Deckschicht 6 besteht aus SiO₂ und eine hydrophobe Schicht aus TMDS (Tetramethyldisiloxan).

In einer Standard-Vakuumanlage 20 werden die Schichten mittels eines Elektronenstrahlverdampfers 21 aufgedampft. Eine Plasmaquelle 22 ist hierbei in der Mitte und auf dem Boden 23 der Anlage 20 angeordnet und auf einen elektrisch isolierenden Substrathalter 24 gerichtet. In der Plasmaquelle 22 ist eine zylindrische, Elektronen emittierende LaB₆-Kathode 25 von einer zylindrischen Anode 26 mit einem Durchmesser von ca. 50 mm umgeben. Es wird ein Glimmentladungs-Plasma erzeugt, wobei ein Edelgas, in erster Linie Argon, über eine Leitung 28 eingeführt wird.

Eine zylindrische Magnetspule 29 umgibt die Anode 26 und bewirkt, daß die Bewegungsmöglichkeit der Elektronen, welche das Plasma erzeugen, in axialer Richtung erheblich vergrößert und in radialer Richtung erheblich verringert wird. Die Elektronen bewegen sich spiralförmig um die magnetischen Feldlinien, wodurch das Plasma in die Beschichtungskammer 20 gelangt. An der Decke 30 der Beschichtungskammer 20 und über dem Substrathalter 24 ist eine ringförmige Magnetspule 31 mit einem inneren Durchmesser vorgesehen, der größer als der Durchmesser des Substrathalters ist. Das Magnetfeld dieser Ringspule 31 und das Magnetfeld der Zylinderspule 29 überlagern sich zu einem Führungsfeld für die Elektronen auf ihrem Weg von der Kathode 25, die durch einen Heizer 27 indirekt geheizt wird, der seinerseits von der Energieversorgung 32 gespeist wird sowie für das ganze Plasma zwischen der Plasmaquelle 22 und dem Substrathalter 24. Vor dem kuppelförmigen Substrathalter 24 wird eine kuppelförmige Plasmarandschicht erzeugt. Weil das Potential des Substrathalters 24 relativ zum Plasma negativ ist, werden die Ionen aus der Plasmarandschicht heraus beschleunigt und bombardieren einen wachsenden Film, der dadurch verdichtet wird. Ein wesentlicher Vorteil dieses Herstellungsverfahrens im Vergleich zu herkömmlichen IAD-Verfahren mit einer Ionenquelle besteht darin, daß die Ionen, welche aus einer Plasmarandschicht, die sich parallel zur gesamten Innenfläche des Substrathalters ausgebildet, starten, über einer kurzen Distanz beschleunigt werden. Bei einer Ionenquelle, wo die Beschleunigung vom Boden der Kammer aus geschieht, ist dies anders. Bei der Vorrichtung gemäß Fig. 4 werden die Ionen aus der Plasmarandschicht nicht durch Zusammenstöße und Energieverluste beeinflußt. Außerdem erstreckt sich das Plasma über die ganze Fläche zwischen der Plasmaquelle 22 und dem Substrathalter 24, so daß die Ionenquelle im Grunde denselben Bereich wie der Substrathalter 24 abdeckt. Mit einer herkömmlichen Ionenquelle mit Gitterextraktion benötigt man eine Extraktionsgitterfläche, die nahezu der Aufstrahlfläche auf dem Substrat entspricht.

Ein reaktives Gas, z. B. O₂, N₂, wird über eine Leitung 34 in die Kammer 20 eingeführt. Aufgrund des Plasmas in der Kammer 20 wird es ionisiert und aktiviert. Das verdampfte Material 35 der Elektronenstrahlkanone 21 muß ebenfalls das Plasma von Substrathalter 24 durchlaufen, so daß es ionisiert und aktiviert wird.

Die Plasmaquelle 22 ist elektrisch von der Kammer 20 isoliert. Außer der zugeführten Entladespannung erhält man deshalb noch eine Potentialdifferenz zwischen der Quelle 22 und der Kammer 20. Die Quelle 22 nimmt ein veränderliches positives Potential gegenüber der Kammer 20 an, während der Substrathalter 24 fast auf dem gleichen Potential wie die Kammer 20 liegt. Die Ionenenergie wird durch die Potentialdifferenz zwischen der Anodenröhre 26, die aus einer Gleichstromquelle 36 mit positivem Potential gespeist wird, und dem Substrathalter 24 bestimmt. Das sich verändernde Potential der Quelle 22 hängt von der Entladespannung, den Partialdrücken der Gase und der Stärke des Magnetfelds ab. Durch das positive "floating" Potential des elektrischen Felds wird eine elektrisches Feld erzeugt, das die Elektronen zwischen der Quelle 22 und dem Substrathalter 24 reflektiert. Wenn sie nicht auf die Anodenröhre 26 treffen, werden sie am Kathodenpotential reflektiert und können erneut aus der Quelle herausgelangen. Man erhält also oszillierende Elektronenwege mit einer effektiven Ionisierung und Anregung von Gasatomen und Molekülen. Aufgrund des Rückstoßeffekts, den die elektrischen Felder in der Nähe der Anode erzeugen, wird das Plasma vor dem Substrathalter 24 von Ionen dominiert. Dies kann man am Potential des Substrathalters 24 erkennen, das etwa zwischen 3 und 5 Volt, bezogen auf die Kammerwand 20, beträgt. Die Entladungsparameter betragen bis zu 80 V Entladespannung, 70 A Entladestrom und 5 kW Plasmaleistung. Die Drücke belaufen sich auf 1 x 10⁻⁴ bis 8 x 10⁻⁴ mbar mit einem Verhältnis von O₂ : Ar von bis zu 4 : 1. Der beschriebene Betrieb der Plasmaquelle ermöglicht es, den Plasmaerzeugungsprozeß von dem Verdampfungsprozeß zu trennen.

Jedes verdampfbare Ausgangsmaterial, z. B. Oxide und Fluoride, kann im Verdampfer 21 verdampft werden, weil keine Kopplung zwischen Plasmaquelle und Verdampferquelle besteht.

Zum Aufdampfen einer kratzfesten Borosilicatschicht kann Granulat oder Plattenmaterial verwendet werden, das im Elektronenstrahlverdampfer 21 mit dem Elektronenstrahlerzeuger 40 verdampft wird. Für die Verdampfung des Borosilicatglases wird eine relativ geringe Verdampferleistung benötigt. Um die Verdampferleistung auch bei hochbrechendem Material gering zu halten, wird vorzugsweise ein Mehrnapftiegel mit möglichst kleinen Näpfen verwendet, von denen nur ein Napf 41 dargestellt ist. Nach dem Abpumpen der Kammer 20 auf einen Druck von < 2 x 10⁻⁵ mbar erfolgt das Aufdampfen des Schichtsystems.

Die SiO-Haftschicht wird mit einer Rate von ca. 0,1nm/s aufgedampft. Gleichzeitig mit dem Öffnen einer nicht dargestellten Verdampferblende wird die Plasmaquelle 22 zugeschaltet. Die Quelle 22 wird hierbei mit reinem Argon bei einem Partialdruck von ca. 1,5 x 10⁻⁴ mbar betrieben. Der Entladestrom beträgt ca. 30 A bei einer Entladespannung von ca. 30 V. Nach Erreichen der gewünschten Schichtdicke wird die Plasmaquelle 22 gleichzeitig mit einem Schließen der Verdampferblende abgeschaltet.

Danach erfolgt das Aufdampfen der dicken Borosilicatglas-Schutzschicht. Auch hierbei wird die Plasmaquelle 22 mit Argon betrieben.

Die Härte der Schutzschicht ist von der Plasmaentladeleistung, d. h. Strom und Spannung, dem Gasdruck und der Beschichtungsrate abhängig. Mit diesen Parametern wird der Härtegradient der Schicht eingestellt. Besonders geringe Härtewerte erreicht man mit geringer Plasmaleistung (< 1 kW) bei relativ hohem Druck (ca. 6 x 10⁻⁴) und einer großen Beschichtungsrate (ca. 5 x 10 nm/s). die größten Härtewerte wurden bei durchgeführten Versuchen mit einer Plasmaleistung von ca. 5 kW bei einem Druck von 1,5 x 10⁻⁴ mbar bei einer Rate von 0,1 nm/s erreicht. Nachdem die gewünschte Schichtdicke erzielt ist, wird mit dem Schließen der Verdampferblende die Plasmaquelle 22 abgeschaltet.

Danach erfolgt das Aufdampfen der ersten hochbrechenden Schicht TiO₂. Prinzipiell können auch andere hochbrechende Materialien, wie z. B. Zirkonoxid etc., verwendet werden. Bei den hochbrechenden Schichten wird die Plasmaquelle 22 ebenfalls mit Argon bei einem Druck von ca. 1,5 x 10⁻⁴ mbar betrieben. Zusätzlich wird Sauerstoff mit einem Partialdruck von ca. 2 x 10⁻⁴ mbar durch die Leitung 34 in die Kammer 20 eingelassen. Ein nicht dargestellter Sauerstoffeinlaß direkt in die Plasmaquelle, analog dem Einlaß 28, ist ebenfalls möglich. Während des Aufdampfens der TiO₂ wird die Plasmaquelle mit einer Entladeleistung von ca. 5 kW betrieben. Die Beschichtungsrate beträgt ca. 0,2 nm/s. Die nächste Schicht SiO₂ wird prinzipiell wie die Schutzschicht aufgedampft, und zwar bei einem Druck von 2 x 10⁻⁴ mbar, einer Plasmaleistung von ca. 4 kW und einer Beschichtungsrate von ca. 0,5 nm/s.

Das Aufdampfen der folgenden hochbrechenden Schicht erfolgt mit den gleichen Parametern wie die erste hochbrechende Schicht. Die letzte SiO₂-Schicht wird wie die vorhergehende SiO₂-Schicht aufgedampft.

Es versteht sich, daß für die Erzeugung von Atomen, Molekülen oder Clustern der Materialien, z. B. SiO oder SiO₂, statt eines Elektronenstrahlverdampfers auch ein thermischer Verdampfer oder eine Sputterkathode verwendet werden kann. Wesentlich ist nur, daß das Plasma in einer von der Elektronenstrahlkanone etc. getrennten Vorrichtung erzeugt wird. Dadurch, daß das Plasma in der Plasmaquelle 22 und die aufzubringenden kleinen Teilchen in einer Verdampferquelle 21 erzeugt werden, wird die Gleichmäßigkeit der Beschichtung besonders groß. Außerdem können die Beschichtungsparameter weitgehend unabhängig voneinander eingestellt werden, was für die Herstellung von Schichten mit Festigkeitsgradienten von großer Bedeutung ist.

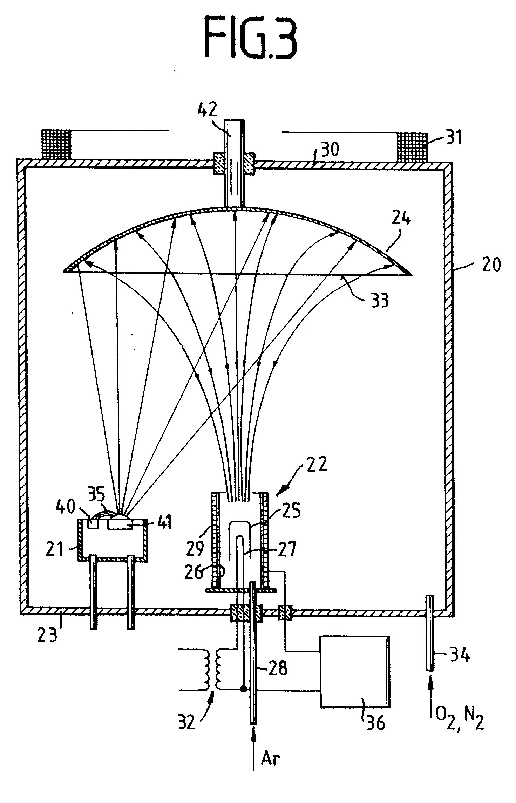

Der Substrathalter 24, dessen unterer Rand mit 33 bezeichnet ist, kann über eine Welle 42 gedreht werden. Er kann auf seiner Unterseite zahlreiche zu beschichtende Linsen oder dergleichen aufweisen. Außerdem kann der Substrathalter 24 einen nicht dargestellten Verdampfungsschutz aufweisen, der beim Aufbringen von isolierenden Materialien das Beschichten eines Teils der Fläche des Substrathalters mit diesen isolierenden Materialien verhindert und damit ein Abfließen von elektrischen Ladungen über den Sustratträger ermöglicht. Weitere Einzelheiten der Vorrichtung gemäß Fig. 3 ergeben sich aus der deutschen Patentanmeldung P 40 20 158.9 und werden deshalb nicht näher beschrieben.

Mit dem beschriebenen Verfahren sind die Schichten shiftfrei und die Antireflexwirkung gleicht der in konventionellen Prozessen erreichten niedrigen Werten.

Die Shiftfreiheit wird erreicht, indem das Quarz (SiO₂) für die verschleißfeste Schicht ersetzt wird durch ein Borosilikatglas mit einem Brechwert von n = 1.47 (Lambda 550 nm). Das im Glas vorhandene Bor verhindert ein Eindringen von Wasser und Sauerstoff in die Schicht, so daß die Schicht an Atmosphäre ihre Homogenität beibehält. Es hat sich weiter gezeigt, daß der Streß in Borosilikatglasschichten geringer ist als in reinen SiO₂-Schichten, was zu einer erhöhten Temperaturbeständigkeit führt.

Ein Unterbrechen der dicken Borosilicatglasschicht für einen kurzen Plasmabeschuß führt zu einer frühzeitigen Störung des Schichtwachstums, so daß aus sogenannten Keimen aufwachsende Streuung vermieden wird. Der dadurch erreichte geringe Streuanteil erhöht die Transparenz der Schicht.

Ein weiteres, in diesem Prozeß angewandtes Mittel der Streuung in der Borosilicatglasschicht zu reduzieren ist der gleichzeitige Einlaß von geringen Mengen Wasser während der Verdampfung. Die dafür verantwortlichen Auslöser sind z. Zt. noch nicht bekannt.

Wegen der geringen optischen Verluste ist es möglich, die Schichtdicke der Verschleißfesten Glasschicht bis zu einer Dicke von 3 µm zu erhöhen, wodurch die Abriebfestigkeit des Gesamtsystems erheblich erhöht wird.

Die Antireflexwirkung wird durch ein 5-Schichtsystem aus den Materialien Ti₂O₃, SiO₂, Al₂O₃ erreicht. Die für eine gute Antireflexwirkung erforderlichen Materialbrechwerte werden mittels PIAD erzeugt.

Das im Antireflexsystem vorhandene SiO₂ kann durch Borosilicatglas ersetzt werden, wodurch auch dieses Schichtsystem im spektralen Verhalten shiftfrei wird. Eine Verbesserung der thermischen und chem. Beständigkeit ist auch hier zu erwarten.

Alle Schichten bis auf die Haftvermittlerschicht werden mit PIAD mittels der APS aufgebracht. Die Substrate werden vor der Beschichtung einem Plasmabeschuß ausgesetzt, der die Haftung deutlich erhöht.

## Patentansprüche

1. Optische Linse aus einem klarsichtigen Kunststoff (1) und einer ersten Schicht (2) aus SiO unmittelbar auf dem Substrat, **dadurch gekennzeichnet**, daß die zweite Schicht (3) aus Borosilicatglas mit einem Brechwert von 1.47 (Lambda 550 nm) gebildet ist und eine Dicke von bis zu 3 µ, vorzugsweise 2550 nm aufweist, wobei die Schichten drei bis sieben zum Zwecke einer Antireflexwirkung aus TiO₂, SiO₂, Al₂O₃ gebildet sind.

2. Optische Linse nach Anspruch 1, **dadurch gekennzeichnet**, daß die ersten Schicht (2) eine Dicke von einer Atomlage bis zu 50 nm aufweist und die zweite Schicht (3) eine Dicke von wenigstens 500 nm besitzt.

3. Optische Linse nach Anspruch 1, **dadurch gekennzeichnet**, daß die dritte Schicht (6) aus TiO₂ besteht.

4. Optische Linse nach Anspruch 1, **dadurch gekennzeichnet**, daß auf der zweiten Schicht (3) ein Mehrschichten-Entspiegelungssystem (7 bis 10) vorgesehen ist.

5. Vorrichtung für die Erzeugung einer dünnen Schicht auf einem Kunststoffsubstrat, mit einer Kammer, in der Plasma erzeugt werden kann, **gekennzeichnet durch**,
a)eine Plasmaquelle (22) gegenüber dem Kunststoffsubstrat;
b)mindestens einen Verdampfer (21) neben der Plasmaquelle (22);
c)mindestens einen Ringmagneten (31) oberhalb des Substrats.

6. Vorrichtung nach Anspruch 5, **dadurch gekennzeichnet**, daß die Plasmaquelle (22) eine zylindrische Anode (26) aufweist, in der sich ein Elektronenemitter (25) befindet, und daß diese zylindrische Anode (26) von einer zylindrischen Spule (29) umgeben ist, wobei in das Innere der zylindrischen Anode (26) ein Gaseinlaß (28) eingeführt ist.

7. Vorrichtung nach den Ansprüchen 5 und 6, **dadurch gekennzeichnet**, daß die Plasmaquelle (25,26) elektrisch von der Vakuumkammer (20) isoliert ist.

8. Verfahren zur Herstellung einer Schicht mit inhomogenen Härten, **dadurch gekennzeichnet**, daß die Parameter einer Plasma-Beschichtungsanlage verändert werden.

9. Verfahren zur Herstellung von Entspiegelungsschichten, **dadurch gekennzeichnet**, daß die Schichten mit Plasmaunterstützung hergestellt werden.

10. Verfahren zum Auftragen dünner Schichten auf ein Kunststoff-Substrat, **gekennzeichnet durch** folgende Schritte:
a)es werden ein oder mehrere Kunststoff-Substrate in einem Substrathalter angeordnet;
b)das Material, welches die Dünne Schicht auf dem Kunsstoff-Substrat bilden soll, wird in einem Elektronenstrahlverdampfer (21) oder Widerstandsverdampfer verdampft;
c)gleichzeitig mit dem Verdampfen des Materials im Verdampfer (21) wird mit einem Plasma aus einer Plasmaquelle (22) das Kunststoff-Substrat beschossen.
